# FASCICULE DE BREVET EUROPEEN

(11) **EP 0 922 607 B1**
(45) Date de publication et mention de la délivrance du brevet: **01.10.2003**
(21) Numéro de dépôt: 98403125.2
(22) Date de dépôt: 10.12.1998
(51) Int. Cl.: B60N 2/00, B60N 2/08

(54) **Agencement de siège amovible et réglable en position longitudinale dans un habitacle de véhicule**
Anordnung für einen ausnehmbaren und in Längsrichtung verstellbaren Sitz im Innenraum eines Kraftfahrzeuges
Arrangement for a removable and longitudinaly adjustable seat inside an automotive vehicle

(30) Priorité: 12.12.1997 FR 9715798
(43) Date de publication de la demande: 16.06.1999
(73) Titulaire: AUTOMOBILES PEUGEOT, 75116 Paris (FR); AUTOMOBILES CITROEN, 92200 Neuilly-sur-Seine (FR)
(72) Inventeur: Roy, Jean-Pascal, 94300 Vincennes (FR)
(74) Mandataire: Habasque, Etienne Joel Jean-François

(56) Documents cités:
- EP-A- 0 609 130
- EP-A- 0 709 247
- DE-U- 29 611 382

## Description

La présente invention concerne un agencement de siège amovible et réglable en position longitudinale dans un habitacle de véhicule automobile (cf. par exemple EP-A-709 247, correspondant an préambule de la revendication indépendante).

On connaît déjà dans l'état de la technique, des agencements de siège de ce type dans lesquels le siège comporte des pieds de support disposés par exemple à l'avant et à l'arrière de l'assise du siège et qui sont destinés à permettre la fixation du siège sur le reste de la structure du véhicule.

C'est ainsi par exemple que l'on connaît des sièges dans lesquels les pieds sont destinés à prendre appui sur des doigts ou des anneaux transversaux portés par le plancher du véhicule et qui sont munis de verrous désarmables d'accrochage sur ces doigts ou ces anneaux.

Des sièges de ce type sont par exemple utilisés dans les véhicules du type monocorps et les sièges sont donc amovibles.

Ces agencements de siège ont été perfectionnés pour permettre un réglage de leur position longitudinale dans l'habitacle du véhicule.

C'est ainsi par exemple que l'on connaît du document EP-A-0 609 130, un tel siège dans lequel les doigts ou anneaux sont fixés à un élément mobile monté coulissant dans une glissière longitudinale fixée au plancher du véhicule et dans lequel l'élément mobile contient des moyens de retenue longitudinale de cet élément sur la glissière, ces moyens étant dégageables par action sur des moyens de commande prévus sur le siège.

On conçoit alors que dans ces sièges, les moyens de commande sont prévus sur ceux-ci alors que les moyens de retenue longitudinale de l'élément sur la glissière sont associés à celle-ci et que, le siège étant amovible et pouvant être séparé des glissières, il convient de prévoir des moyens de liaison spécifiques entre le siège et les glissières afin d'assurer la commande de ces moyens de retenue longitudinale.

Ceci présente un certain nombre d'inconvénients, notamment au niveau de la structure relativement complexe de tels agencements de siège et de la sécurité des occupants de ceux-ci.

On connaît dans l'état de la technique selon l'article 54(3) CBE, le document EP-A-904 975 qui décrit un agencement de siège du type comportant des pieds de support munis de moyens d'ancrage montés à coulissement dans des profilés complémentaires de guidage reliés au plancher et dont certains au moins comportent des moyens d'immobilisation en position longitudinale du siège, déplaçables par des moyens de commande portés par le siège, entre des positions active d'immobilisation du siège et escamotée de réglage en position de celui-ci.

L'invention a pour objet un agencement de siège amovible et réglable en position longitudinale dans un habitacle de véhicule automobile, le siège comportant des pieds de support munis à une extrémité, de moyens d'ancrage montés à coulissement dans des profilés complémentaires de guidage reliés au plancher du véhicule et dont certains au moins comportent des moyens d'immobilisation en position longitudinale du siège sur le plancher, déplaçables sous l'action de moyens de commande portés par le siège, entre des positions active d'immobilisation du siège et escamotée de réglage en position de celui-ci, caractérisé en ce que les moyens d'ancrage sont extractibles des profilés pour permettre un retrait du siège et en ce que les moyens d'immobilisation sont logés dans des moyens d'ancrage et sont déplaçables entre leur position escamotée dans les moyens d'ancrage et leur position active dans laquelle ils font saillie par rapport aux moyens d'ancrage et sont adaptés pour coopérer avec des moyens de butée complémentaires des profilés pour immobiliser le siège.

D'autres caractéristiques techniques de l'invention sont décrites dans les revendications dépendantes.

L'invention sera mieux comprise à l'aide de la description qui va suivre, donnée uniquement à titre d'exemple et faite en se référant aux dessins annexés, sur lesquels :
- la Fig.1 représente un schéma synoptique illustrant la structure générale d'un agencement de siège selon l'invention;
- la Fig.2 représente un exemple de réalisation d'une partie de moyens d'ancrage entrant dans la constitution d'un tel agencement de siège;
- la Fig.3 représente une vue en coupe illustrant un exemple de réalisation de ces moyens d'ancrage;
- les Figs.4,5 et 6 illustrent différents modes de réalisation de profilés entrant dans la constitution d'un agencement de siège selon l'invention; et
- la Fig.7 représente un schéma synoptique illustrant des moyens de manoeuvre d'un pied de support d'un agencement de siège selon l'invention.

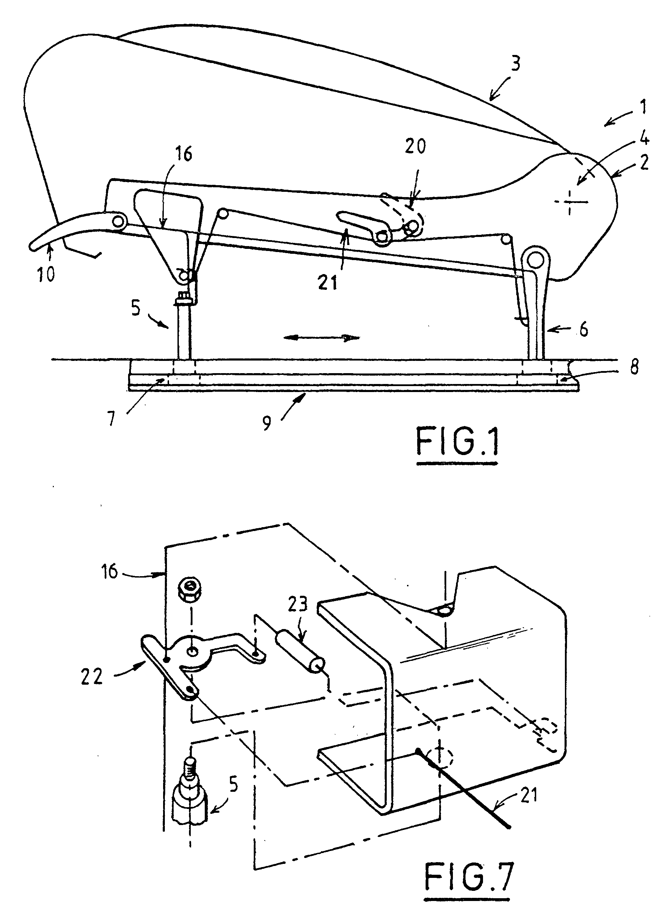

On reconnaît en effet sur la figure 1, un agencement de siège amovible et réglable en position longitudinale dans un habitacle de véhicule automobile.

Cet agencement de siège est désigné par la référence générale 1 et comporte par exemple une assise désignée par la référence générale 2 et un dossier désigné par la référence générale 3, articulé sur cette assise par exemple en 4.

Dans l'exemple de réalisation représenté sur cette figure 1, le dossier 3 est illustré en position rabattue sur l'assise 2 du siège.

De plus, ce siège comporte des pieds de support régulièrement répartis sous l'assise de celui-ci et comprenant par exemple deux pieds disposés à l'avant de l'assise et deux pieds disposés à l'arrière de celle-ci, l'un des pieds disposés à l'avant de l'assise du siège étant désigné par la référence générale 5, et l'un des pieds disposés à l'arrière de celle-ci étant désigné par la référence générale 6.

En fait, ces pieds de support, 5 et 6, sont munis à une extrémité de moyens d'ancrage désignés par les références générales 7 et 8 respectivement et montés à coulissement dans des profilés complémentaires de guidage 9, reliés au plancher du véhicule de façon classique.

Comme cela sera décrit plus en détail par la suite, certains au moins de ces moyens d'ancrage comportent des moyens d'immobilisation en position longitudinale du siège sur le plancher, déplaçables sous l'action de moyens de commande 10 portés par le siège comme visible à la figure 1, entre des positions active d'immobilisation du siège et escamotée de réglage en position de celui-ci.

De plus, ces moyens d'ancrage 7 et 8, sont extractibles des profilés 9 pour permettre un retrait du siège de l'habitacle du véhicule par exemple.

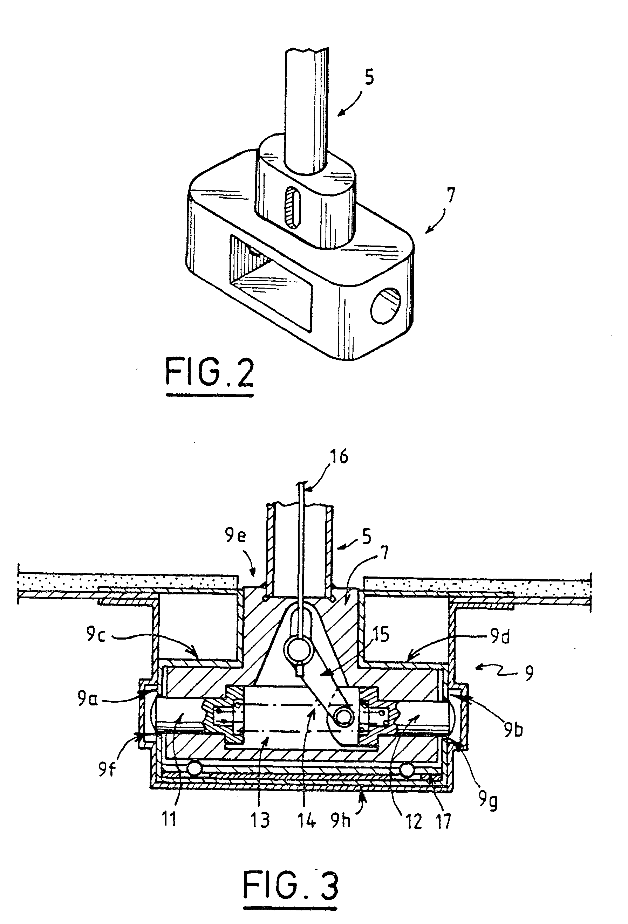

Comme cela est représenté sur les figures 2 et 3, chaque pied de support, par exemple 5, du siège comporte à son extrémité, des moyens d'ancrage 7, qui présentent par exemple la forme générale d'un T inversé, adapté pour s'engager dans un profilé de forme complémentaire 9, qui présente alors la forme générale d'un U, dont les extrémités des branches latérales 9a et 9b comportent des bords de butée 9c et 9d en regard, délimitant entre eux une fente par exemple 9e de passage du pied correspondant 5 du siège et des moyens d'ancrage 7.

En fait, et comme on peut le voir plus clairement sur la figure 3, des moyens d'immobilisation du siège en position sont logés dans les moyens d'ancrage 7, et sont déplaçables entre une position escamotée dans ces moyens d'ancrage et une position active dans laquelle ils font saillie par rapport à ceux-ci et sont adaptés pour coopérer avec des moyens de butée complémentaires du profilé correspondant pour immobiliser le siège.

Dans l'exemple de réalisation qui est décrit sur cette figure 3, les moyens d'immobilisation sont déplaçables transversalement dans les moyens d'ancrage 7 et les moyens de butée complémentaires du profilé sont ménagés dans les parois latérales 9a et 9b de celui-ci.

En fait, les moyens d'immobilisation peuvent par exemple comporter deux pions d'immobilisation désignés par la référence générale 11 et 12 sur cette figure 3, disposés symétriquement dans les moyens d'ancrage 7, c'est-à-dire s'étendant par exemple dans les branches transversales du T, pour être déplaçables à coulissement dans celles-ci entre une position escamotée dans ces moyens d'ancrage et une position active en saillie par rapport à ces moyens d'ancrage et dans laquelle ces pions coopèrent avec des moyens de butée complémentaires constitués par exemple par des crans 9f et 9g ou autres des parois latérales 9a et 9b du profilé, pour immobiliser les moyens d'ancrage et donc le siège, par rapport aux profilés et donc au plancher du véhicule.

Des moyens élastiques désignés par la référence générale 13, peuvent être interposés entre ces pions dans les moyens d'ancrage, pour solliciter ceux-ci en position active.

Des moyens de déplacement de ces pions sont alors prévus dans ces moyens d'ancrage 7,pour déplacer ceux-ci vers leur position escamotée, ces moyens de déplacement étant désignés par la référence générale 14 sur cette figure 3 et comprenant, associé à chaque pion, un bras de manoeuvre 15 raccordé à un câble ou à une tringlerie 16 s'étendant dans le pied de support 5 correspondant et relié au levier de commande 10 actionnable par l'utilisateur, pour déplacer ceux-ci.

On conçoit alors que lorsque l'utilisateur manoeuvre ce levier 10, il provoque par l'intermédiaire du câble ou de la tringlerie 16, l'escamotage des pions 11 et 12 dans les moyens d'ancrage 7 et que ceci permet alors un déplacement à coulissement de ces moyens d'ancrage et donc du siège par rapport aux profilés, pour permettre son réglage en position longitudinale dans l'habitacle du véhicule.

On notera à cet égard que des moyens de roulement 17 peuvent être prévus entre les moyens d'ancrage 7 et le profilé 9 et plus particulièrement la paroi de fond 9h de ce profilé.

Ces moyens de roulement présentent toute structure appropriée permettant de faciliter le déplacement des moyens d'ancrage dans ce profilé.

Lorsque le siège a atteint la position de réglage souhaitée par l'utilisateur, celui-ci relâche alors le levier de commande 10 de manière à relâcher les pions 11 et 12. Les moyens élastiques 13 sollicitent alors ces pions vers leur position active dans laquelle leurs extrémités coopèrent avec les moyens de butée complémentaires des parois latérales du profilé, pour immobiliser le siège en position.

Si dans la position atteinte par le siège, ces pions ne sont pas en face des moyens de butée complémentaires du profilé, un léger déplacement du siège provoque l'engagement de ceux-ci.

Le retrait du siège peut quant à lui être obtenu de différentes façons.

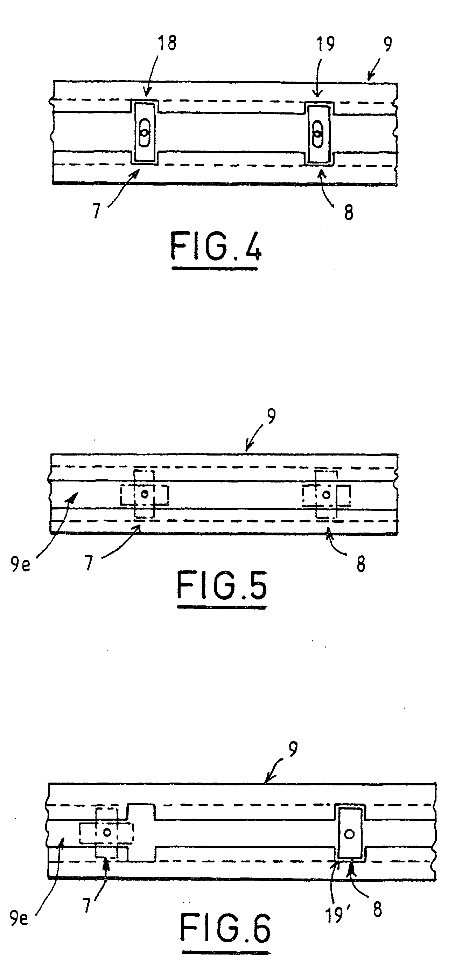

C'est ainsi par exemple que, comme on peut le voir sur la figure 4, les profilés par exemple 9, peuvent comporter des décrochements 18 et 19, de passage d'au moins certains des moyens d'ancrage 7 et 8, dans une position d'extraction prédéterminée, pour permettre le retrait du siège.

On conçoit alors que des décrochements correspondants de ce type sont prévus dans les deux profilés associés aux pieds de support disposés à gauche et à droite du siège pour permettre, lorsque ce siège est amené dans la position d'extraction prédéterminée, le dégagement des moyens d'ancrage des pieds de support des profilés correspondants du plancher du véhicule et donc le retrait du siège.

Ces décrochements peuvent être décalés les uns par rapport aux autres afin d'éviter toute extraction accidentelle du siège.

Ces décrochements servent également lors de la remise en place du siège dans le véhicule pour permettre l'engagement des moyens d'ancrage des pieds de support de celui-ci dans les profilés.

Il va de soi bien entendu que d'autres modes de réalisation de ces moyens peuvent être envisagés pour assurer cette extraction et donc le retrait du siège.

C'est ainsi par exemple que sur la figure 5, on a illustré une variante de réalisation de ceux-ci, dans laquelle les moyens d'ancrage 7 et 8 sont montés déplaçables angulairement entre une position active dans laquelle ils s'étendent transversalement dans les profilés 9 du plancher et une position escamotée dans laquelle ils s'étendent parallèlement à l'axe longitudinal de ceux-ci, pour permettre leur extraction à travers la fente 9e du profilé 9.

Ce déplacement angulaire des moyens d'ancrage 7 et 8 dans le profilé 9, peut être assuré par l'intermédiaire des moyens de commande se présentant également sous la forme d'un levier porté par le siège, désigné par la référence générale 20 sur la figure 1, et relié par l'intermédiaire d'un câble ou d'une tringlerie 21 à des moyens manoeuvre et de déplacement angulaire de ces moyens d'ancrage dans les profilés, comme cela sera décrit plus en détail par la suite.

Une solution intermédiaire entre les modes de réalisation représentés sur les figures 4 et 5, peut être envisagée et est illustrée sur la figure 6.

Selon cette variante de réalisation, les moyens d'ancrage associés à certains pieds de support du siège, tels que les pieds 7 disposés à l'avant de l'assise de celui-ci, sont déplaçables angulairement entre une position active et une position escamotée permettant l'extraction de ceux-ci des profilés correspondants et les profilés 9 comportent des décrochements 19' situés dans un emplacement particulier de ceux-ci, pour permettre l'extraction des moyens d'ancrage associés aux autres pieds de support du siège, c'est-à-dire par exemple ceux 8 disposés à l'arrière de l'assise du siège, dans une position prédéterminée d'extraction.

Il va de soi qu'une telle structure peut également être inversée pour permettre une inversion de la disposition du siège dans l'habitacle du véhicule.

On a représenté sur la figure 7, un exemple de réalisation des moyens permettant de déplacer angulairement les moyens d'ancrage entre leur position active et escamotée.

On reconnaît en effet sur cette figure, le câble ou la tringlerie 21 relié à l'une de ses extrémités au levier 20 porté par le siège et actionnable par l'utilisateur.

A son autre extrémité, ce câble ou cette tringlerie 21 est relié à un mécanisme à manivelle désigné par la référence générale 22 portant le pied de support 5 correspondant, pour permettre en fonction de l'état de manoeuvre du levier 20, de faire pivoter ce pied et donc les moyens d'ancrage prévus à l'extrémité de celui-ci entre leur position active et leur position escamotée.

Des moyens élastiques désignés par la référence générale 23 permettent de ramener ce pied dans une position correspondant à la position active des moyens d'ancrage dans le profilé.

On conçoit alors que dans ce cas, lorsque l'utilisateur manoeuvre le levier 20, il entraîne un déplacement du câble 21 et un déplacement angulaire du pied de support et des moyens d'ancrage correspondants dans le profilé entre leur position active et leur position escamotée, ce qui permet l'extraction du siège.

Il va de soi bien entendu que différents modes de réalisation de ces différents moyens peuvent être envisagés.

## Revendications

1. Agencement de siège amovible et réglable en position longitudinale dans un habitacle de véhicule automobile, le siège comportant des pieds de support (5,6), munis à une extrémité, de moyens d'ancrage (7,8) montés à coulissement dans des profilés complémentaires de guidage (9) reliés au plancher du véhicule et dont certains au moins comportent des moyens (11,12) d'immobilisation en position longitudinale du siège sur le plancher, déplaçables sous l'action de moyens de commande (10,14,15,16) portés par le siège, entre des positions active d'immobilisation du siège et escamotée de réglage en position de celui-ci, **caractérisé en ce que** les moyens d'ancrage (7,8) sont extractibles des profilés (9) pour permettre un retrait du siège et **en ce que** les moyens d'immobilisation (11,12) sont logés dans les moyens d'ancrage (7) et sont déplaçables entre leur position escamotée dans les moyens d'ancrage et leur position active dans laquelle ils font saillie par rapport aux moyens d'ancrage (7) et sont adaptés pour coopérer avec des moyens de butée complémentaires (9f,9g) des profilés (9) pour immobiliser le siège.

2. Agencement selon la revendication 1, **caractérisé en ce que** les profilés (9) comportent des décrochements (18,19;19') de passage d'au moins certains des moyens d'ancrage (7,8) dans une position d'extraction, pour permettre le retrait du siège.

3. Agencement selon la revendication 1 ou 2, **caractérisé en ce qu'**au moins certains des moyens d'ancrage (7,8) sont déplaçables angulairement sous l'action de moyens de commande (20) portés par le siège, entre une position active dans laquelle ils s'étendent transversalement dans les profilés (9) et une position escamotée dans laquelle ils s'étendent parallèlement à l'axe longitudinal de ceux-ci, pour permettre leur extraction.

4. Agencement selon la revendication 3, **caractérisé en ce que** les pieds de support (5,6) sont déplaçables angulairement par les moyens de commande (20).

5. Agencement selon la revendication 1, **caractérisé en ce que** les moyens d'immobilisation (11,12) sont déplaçables transversalement dans les moyens d'ancrage (7) et **en ce que** les moyens de butée complémentaires (9f,9g) des profilés (9) sont ménagés dans les parois latérales (9a,9b) de ceux-ci.

6. Agencement selon la revendication 5, **caractérisé en ce que** les moyens d'immobilisation comprennent deux pions d'immobilisation (11,12) disposés symétriquement dans les moyens d'ancrage (7) et entre lesquels sont interposés des moyens de sollicitation élastique (13).

7. Agencement selon l'une quelconque des revendications précédentes, **caractérisé en ce que** les moyens de commande comprennent chacun un levier (10,20) actionnable par un utilisateur et relié par un câble ou une tringlerie (16,21) aux moyens correspondants.

8. Agencement selon l'une quelconque des revendications précédentes, **caractérisé en ce que** des moyens de roulement (17) sont interposés entre les moyens d'ancrage (7) et les profilés (9).

9. Agencement selon la revendication 8, **caractérisé en ce que** les moyens de roulement (17) sont interposés entre les moyens d'ancrage (7) et la paroi de fond (9h) des profilés (9).

10. Agencement selon l'une quelconque des revendications précédentes, **caractérisé en ce que** les moyens d'ancrage (7) présentent chacun la forme générale d'un T inversé et **en ce que** les profilés (9) présentent chacun la forme générale d'un U, dont les extrémités des branches latérales comportent des bords de butée (9c,9d) en regard, délimitant entre eux une fente (9e) de passage des pieds.

## Patentansprüche

1. Abnehmbare Sitzanordnung, deren Längsposition in der Fahrgastzelle eines Kraftfahrzeugs einstellbar ist, wobei der Sitz Tragfüße (5, 6) aufweist, die an einem Ende mit Verankerungseinrichtungen (7, 8) versehen sind, die gleitfähig in komplementären, mit dem Boden des Fahrzeugs verbundenen Führungsschienen (9) montiert sind und von denen wenigstens einige mit Vorrichtungen (11, 12) zur Arretierung des Sitzes am Boden in Längsrichtung versehen sind, die mittels vom Sitz getragener Steuerorgane (10, 14, 15, 16) zwischen einer aktiven, zur Arretierung des Sitzes dienenden Stellung und einer eingezogenen, zur Positionierung des Sitzes dienenden Stellung verschiebbar sind, **dadurch gekennzeichnet, dass** die Verankerungseinrichtungen (7, 8) aus den Profilschienen (9) herausnehmbar sind, um einen Ausbau des Sitzes zu erlauben, und dass die Arretierungsvorrichtungen (11, 12) in den Verankerungseinrichtungen (7) untergebracht sind und zwischen ihrer in die Verankerungseinrichtungen eingezogenen Stellung und ihrer aktiven, aus den Verankerungseinrichtungen (7) vorstehenden Stellung verschiebbar sind und ausgebildet sind, mit komplementären Anschlagorganen (9f, 9g) der Profilschienen (9) zusammenzuwirken, um den Sitz zu arretieren.

2. Anordnung nach Anspruch 1, **dadurch gekennzeichnet, dass** die Profilschienen (9) Ausnehmungen (18, 19; 19') aufweisen, die dazu dienen, in einer Entnahmeposition wenigstens einige der Verankerungseinrichtungen (7, 8) hindurchtreten zu lassen, um den Ausbau des Sitzes zu ermöglichen.

3. Anordnung nach Anspruch 1 oder 2, **dadurch gekennzeichnet, dass** wenigstens einige der Verankerungseinrichtungen (7, 8) mittels eines vom Sitz getragenen Steuerorgans (20) bezüglich ihres Winkels zwischen eine aktiven Stellung, in der sie sich in den Profilschienen (9) quer erstrecken, und einer umgeklappten Stellung, in der sie sich parallel zur Längsachse der Profilschienen (9) erstrecken, verstellbar sind, um ihre Entnahme zu ermöglichen.

4. Anordnung nach Anspruch 5, **dadurch gekennzeichnet, dass** die Tragfüße (5, 6) mittels des Steuerorgans (20) bezüglich ihres Winkels verstellbar sind.

5. Anordnung nach Anspruch 1, **dadurch gekennzeichnet, dass** die Arretierungsvorrichtungen (11, 12) in den Verankerungseinrichtungen (7) quer verschiebbar sind und dass die Anschlagorgane (9f, 9g) der Profilschienen (9) in den Seitenwänden (9a, 9b) der Profilschienen (9) ausgebildet sind.

6. Anordnung nach Anspruch 5, **dadurch gekennzeichnet, dass** die Arretierungsvorrichtungen zwei Arretierungszapfen (11, 12) umfassen, die symmetrisch in den Verankerungseinrichtungen (7) angeordnet sind und zwischen denen ein elastisches Vorspannorgan (13) angeordnet ist.

7. Anordnung nach einem der vorhergehenden Ansprüche, **dadurch gekennzeichnet, dass** jedes Steuerorgan einen Hebel (10, 20) aufweist, der von einem Benutzer betätigbar ist und durch einen Drahtzug oder ein Gestänge (16, 21) mit den zugehörigen Einrichtungen verbunden ist.

8. Anordnung nach einem der vorhergehenden Ansprüche, **dadurch gekennzeichnet, dass** zwischen den Verankerungseinrichtungen (7) und den Profilschienen (9) Wälzkörper (17) angeordnet sind.

9. Anordnung nach Anspruch 8, **dadurch gekennzeichnet, dass** die Wälzkörper (17) zwischen den Verankerungseinrichtungen (7) und dem Boden (9h) der Profilschienen (9) angeordnet sind.

10. Anordnung nach einem der vorhergehenden Ansprüche, **dadurch gekennzeichnet, dass** die Verankerungseinrichtungen (7) jeweils die allgemeine Gestalt eines umgedrehten T haben und dass die Profilschienen (9) jeweils die allgemeine Gestalt eines U haben, dessen Seitenschenkelenden einander zugewandte Anschlagränder (9c, 9d) besitzen, die zwischen sich einen Spalt (9e) begrenzen, der dazu dient, die Tragfüße hindurchtreten zu lassen.

## Claims

1. A seat system including a removable seat whose longitudinal position in a passenger compartment of an automobile vehicle can be adjusted, the seat including support legs (5, 6) provided at one end with anchoring means (7, 8) adapted to slide in complementary guide sections (9) connected to the floor of the vehicle and at least some of which include means (11, 12) for immobilising the seat longitudinally on the floor movable by operating means (10, 14, 15, 16) carried by the seat between an active position for immobilising the seat and a retracted position for adjusting its position, which seat system is **characterised in that** the anchoring means (7, 8) can be extracted from the sections (9) so that the seat can be removed and **in that** the immobilising means (11, 12) are accommodated in the anchoring means (7), can be moved between their position retracted into the anchoring means and their active position, in which they project relative to the anchoring means (7), and are adapted to co-operate with complementary abutment means (9f, 9g) on the sections (9) to immobilise the seat.

2. A seat system according to claim 1, **characterised in that** the sections (9) include cut-outs (18, 19; 19') through which at least some of the anchoring means (7, 8) can pass in an extraction position to allow the seat to be removed.

3. A seat system according to claim 1 or claim 2, **characterised in that** at least some of the anchoring means (7, 8) can be moved angularly by operating means (20) carried by the seat between an active position in which they extend transversely in the sections (9) and a retracted position in which they extend parallel to the longitudinal axis thereof to enable them to be extracted therefrom.

4. A seat system according to claim 3, **characterised in that** the support legs (5, 6) can be moved angularly by the operating means (20).

5. A seat system according to claim 1, **characterised in that** the immobilising means (11, 12) can move transversely in the anchoring means (7) and the complementary abutment means (9f, 9g) on the sections (9) are formed in the lateral walls (9a, 9b) thereof.

6. A seat system according to claim 5, **characterised in that** the immobilising means include two immobilising pins (11, 12) disposed symmetrically in the anchoring means (7) and between which spring-loading means (13) are disposed.

7. A seat system according to any preceding claim, **characterised in that** the operating means each include a lever (10, 20) that can be actuated by a user and is connected by a cable or linkage (16, 21) to the corresponding means.

8. A seat system according to any preceding claim, **characterised in that** bearing means (17) are disposed between the anchoring means (7) and the sections (9).

9. The seat system claimed in claim 8, **characterised in that** the bearing means (17) are disposed between the anchoring means (7) and a bottom wall (9h) of the sections (9).

10. A seat system according to any preceding claim, **characterised in that** the anchoring means (7) are of generally inverted T-shape and the sections (9) each are generally U-shaped, the ends of the lateral branches of the U-shape having facing abutment rims (9c, 9d) delimiting between them a slot (9e) through which the legs can pass.
